# DEMANDE DE BREVET EUROPEEN

(11) **EP 3 939 481 A1**
(43) Date de publication de la demande: **19.01.2022**
(21) Numéro de dépôt: 21177849.3
(22) Date de dépôt: 04.06.2021
(51) Int. Cl.: A47J 43/07

(54) **SYSTEME DE VERROUILLAGE D'UN BOL SUR UNE BASE MOTORISEE D'UN ROBOT CULINAIRE**

(30) Priorité: 05.06.2020 FR 2005918
(71) Demandeur: SEB S.A., 69130 Ecully (FR)
(72) Inventeur: MORICE, Katell, 53100 MAYENNE (FR); GERARD, Emmanuel, 61410 COUTERNE (FR); BENESTEAU, Pascal, 53000 LAVAL (FR)
(74) Mandataire: SEB Développement

(57) **Abrégé**

La présente invention concerne un système de verrouillage (10) comprenant un premier organe de verrouillage (6) agencé sur un bol (2) et un deuxième organe de verrouillage (8) agencé sur une base motorisée (4), le premier organe de verrouillage (6) et le deuxième organe de verrouillage (8) étant allongés et prévus pour s'insérer l'un dans l'autre.

Selon l'invention, le premier organe de verrouillage (6) s'étend à partir d'une surface inférieure (21) d'un fond (22) du bol (2) selon une direction axiale (A), le deuxième organe de verrouillage (8) est monté mobile en rotation sur un espace de réception (41) du bol (2) autour de la direction axiale (A) et est configuré pour pivoter entre une position de verrouillage et une position de déverrouillage dans laquelle le premier organe de verrouillage (6) et le deuxième organe de verrouillage (8) sont libres en translation l'un par rapport à l'autre selon la direction axiale (A) pour permettre la mise en place du bol (2) sur la base motorisée (4) ou le retrait du bol (2) de la base motorisée (4).

## Description

### DOMAINE DE L'INVENTION

La présente invention concerne le domaine des robots culinaires et plus particulièrement le domaine des systèmes de verrouillage d'un bol sur une base motorisée d'un robot culinaire.

### ETAT DE LA TECHNIQUE

D'une manière connue, les robots culinaires sont des appareils électroménagers comprenant traditionnellement au moins une base motorisée et un bol monté sur la base motorisée.

Généralement un outil de travail rotatif est positionné au fond du bol. L'outil de travail rotatif peut permet de réaliser des travaux de hachage, de pétrissage, de mélange, ou d'émulsion.

En fonction des modèles de robots culinaires, plusieurs types d'outils de travail rotatifs peuvent être prévus pour réaliser des travaux spécifiques tels que des émulsions, des préparations broyées, des mélanges, etc.

En outre, si désiré, le robot peut comprendre un organe de chauffe permettant de chauffer le bol, comme une casserole sur une cuisinière.

Un grand avantage des robots culinaires est leur puissance et leur vitesse de hachage sui permet par exemple de réaliser des farines à partir de graines diverses.

Etant donnés la vitesse et le couple pouvant être développés par l'outil de travail rotatif, il est nécessaire que le bol soit solidement fixé à la base motorisée du robot culinaire durant le fonctionnement de ce dernier.

D'autre part, il est pratique de pouvoir extraire le bol de la base motorisée du robot culinaire pour par exemple le vider ou le nettoyer.

Ainsi, la plupart des robots culinaires présentent un système de verrouillage permettant d'alternativement verrouiller ou déverrouiller le bol sur la base motorisée du robot culinaire.

Un verrouillage par baïonnette du bol sur la base motorisée permet un tel maintien mais présente l'inconvénient d'utiliser une rotation du bol sur la base motorisée pour assurer la retenue du bol. Une telle réalisation est incompatible avec une mise en place du bol sur la base motorisée par un simple mouvement de translation dans une direction verticale. Un tel mouvement permet d'améliorer l'ergonomie de l'appareil et aussi de simplifier sa construction notamment lorsque le bol comporte un élément chauffant alimenté électriquement par la base motorisée par l'intermédiaire de connecteurs. On connait par ailleurs plusieurs systèmes de verrouillage réalisant d'une part un verrouillage du couvercle par rapport au bol et d'autre part un blocage du bol sur la base motorisée. En effet, lorsque l'outil de travail rotatif tourne à vitesse élevée et/ou lorsque l'outil de travail rotatif est coupant, il est souhaitable que le couvercle soit verrouillé sur le bol et que le couvercle ne puisse pas être retiré alors que l'outil de travail rotatif est en mouvement. En outre, cela permet d'améliorer la sécurité de l'appareil en interdisant toute extraction du bol durant le fonctionnement du robot culinaire.

Cependant, dans certaines applications une telle configuration n'est pas satisfaisante, car il serait souhaitable de pouvoir décorréler le verrouillage du bol sur la base motorisée de la présence du couvercle sur le bol. En effet, dans certaines applications il est souhaitable de pouvoir utiliser le bol verrouillé sur la base motorisée, sans utiliser de couvercle, par exemple pour des opérations n'utilisant pas d'outil de travail rotatif, comme une opération de cuisson dans un robot culinaire chauffant, ou tout simplement pour inspecter les aliments, remuer les aliments ou ajouter des ingrédients. D'autre part il serait souhaitable d'avoir un système de verrouillage plus simple et plus robuste que les systèmes existants.

### EXPOSE DE L'INVENTION

Selon un premier aspect, l'invention propose un système de verrouillage d'un bol de robot culinaire sur une base motorisée de robot culinaire, la base motorisée comprenant un espace de réception destiné à recevoir le bol de manière amovible, le système de verrouillage comprenant un premier organe de verrouillage agencé sur le bol et un deuxième organe de verrouillage agencé sur la base motorisée. Le premier organe de verrouillage et le deuxième organe de verrouillage sont allongés et prévus pour s'insérer l'un dans l'autre. Le premier organe de verrouillage s'étend à partir d'une surface inférieure du bol selon une direction axiale correspondant à la direction de mise en place du bol sur la base motorisée. Le deuxième organe de verrouillage est monté mobile en rotation sur l'espace de réception du bol autour de la direction axiale et est configuré pour pivoter entre une position de verrouillage, dans laquelle le premier organe de verrouillage et le deuxième organe de verrouillage sont insérés l'un dans l'autre et sont bloqués en translation l'un par rapport à l'autre selon la direction axiale, et une position de déverrouillage, dans laquelle le premier organe de verrouillage et le deuxième organe de verrouillage sont libres en translation l'un par rapport à l'autre selon la direction axiale pour permettre la mise en place du bol sur la base motorisée ou le retrait du bol de la base motorisée.

Ainsi, le système de verrouillage selon l'invention permet de verrouiller le fond du bol à une base motorisée. Cette disposition permet de garantir un verrouillage optimal du bol tout en permettant d'extraire un couvercle du bol si cela est souhaité. En d'autres termes, le système de verrouillage selon l'invention permet de verrouiller le bol sans verrouiller un couvercle sur le bol.

Le premier organe de verrouillage, respectivement le deuxième organe de verrouillage, peut-être une broche formant un élément mâle et l'autre parmi le premier organe de verrouillage et le deuxième organe de verrouillage peut être un tube formant un élément femelle ayant une forme complémentaire de l'élément mâle pour une insertion de l'élément mâle dans l'élément femelle.

L'un parmi le premier organe de verrouillage et le deuxième organe de verrouillage peut présenter au moins une rainure et l'autre parmi le premier organe de verrouillage et le deuxième organe de verrouillage peut présenter au moins une baïonnette adaptée pour coulisser dans ladite au moins une rainure.

L'un parmi le premier organe de verrouillage et le deuxième organe de verrouillage peut présenter au moins une rainure radiale et au moins une rainure axiale et l'autre parmi le premier organe de verrouillage et le deuxième organe de verrouillage peut présenter au moins une baïonnette adaptée pour coulisser dans ladite au moins une rainure axiale et ladite au moins une rainure radiale, pour qu'en position de déverrouillage ladite au moins une baïonnette puisse coulisser dans ladite au moins une rainure axiale, et en position de verrouillage ladite au moins une baïonnette soit positionnée dans ladite au moins une rainure radiale et ne puisse pas coulisser dans ladite au moins une rainure axiale.

La broche peut présenter ladite au moins une rainure radiale et ladite au moins une rainure axiale, et le tube peut présenter ladite au moins une baïonnette.

La broche peut comprendre deux rainures axiales radialement opposées et le tube peut présenter deux baïonnettes radialement opposées.

Le système de verrouillage peut comprendre un organe moteur adapté pour faire pivoter le deuxième organe de verrouillage entre la position de verrouillage et la position de déverrouillage.

L'organe moteur peut être agencé dans la base motorisée.

Le premier organe de verrouillage peut être la broche et le deuxième organe de verrouillage peut être le tube.

Le premier organe de verrouillage peut comprendre des moyens de fixation au bol et le deuxième organe de verrouillage comprend des moyens de fixation à la base motorisée, pour fixer le système de verrouillage sur un robot culinaire et un bol préexistants.

La surface inférieure peut être logée dans l'espace de réception de la base motorisée lorsque le bol est en place sur la base motorisée.

Selon un autre aspect, l'invention concerne un bol de robot culinaire destiné à être assemblé sur une base motorisée de robot culinaire et comprenant un premier organe de verrouillage appartenant à un système de verrouillage selon l'invention.

Selon un autre aspect, l'invention concerne une base motorisée de robot culinaire comprenant un espace de réception d'un bol de robot culinaire dans lequel est agencé un deuxième organe de verrouillage appartenant à un système de verrouillage selon l'invention.

La base motorisée peut comprendre un moteur principal adapté pour entrainer en rotation un outil de travail rotatif, et peut comprendre un organe moteur d'un système de verrouillage selon l'invention.

Selon un autre aspect, l'invention concerne un ensemble de robot culinaire comprenant une base motorisée selon l'invention et un bol selon l'invention.

### DESCRIPTION DES FIGURES

D'autres caractéristiques, buts et avantages de l'invention ressortiront de la description qui suit, qui est purement illustrative et non limitative, et qui doit être lue en regard des dessins annexés dans lesquels :
[Fig. 1] La figure 1 est une représentation en coupe partielle d'un bol verrouillé sur une base motorisée par un système de verrouillage conforme à l'invention.
[Fig. 2] La figure 2 est une représentation partielle en perspective d'une paroi de fond d'un bol présentant un premier organe de verrouillage conforme à l'invention.
[Fig. 3] La figure 3 est une vue agrandie en perspective d'un premier organe de verrouillage conforme à l'invention.
[Fig. 4] La figure 4 est une vue en perspective d'un deuxième organe de verrouillage conforme à l'invention.

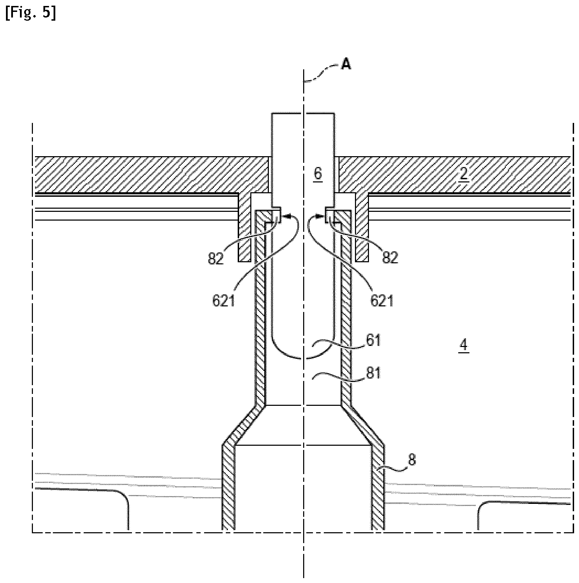

[Fig. 5] La figure 5 est une vue en coupe d'un système de verrouillage conforme à l'invention.

### DESCRIPTION DETAILLEE DE L'INVENTION

Selon un premier aspect, l'invention propose un système de verrouillage 10 d'un bol 2 de robot culinaire 1 sur une base motorisée 4 de robot culinaire 1.

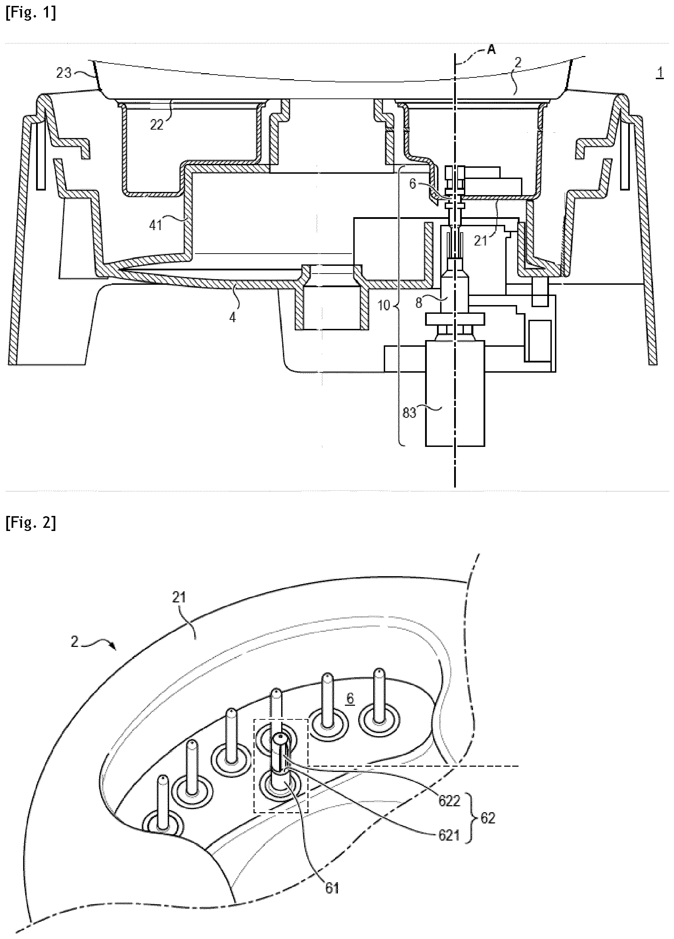

Le système de verrouillage 10 comprend essentiellement un premier organe de verrouillage 6 agencé sur le bol 2 et un deuxième organe de verrouillage 8 monté mobile en rotation sur la base motorisée 4. La figure 1 illustre un exemple de réalisation du système de verrouillage 10. Sur la figure 1, le bol 2 et la base motorisée 4 sont partiellement représentés.

### Base motorisée

Typiquement, la base motorisée 4 comprend un espace de réception 41 destiné à recevoir le bol 2 de manière amovible. L'espace de réception 41 comprend le deuxième organe de verrouillage 8, dont la structure sera développée ci-après. L'espace de réception 41 peut notamment présenter au moins une empreinte supérieure adaptée pour recevoir une nervure inférieure du bol 2, et/ou au moins une protubérance supérieure adaptée pour s'encastrer dans une empreinte inférieure du bol 2. Cet ensemble empreinte supérieure et protubérance supérieure permet d'éviter toute translation radiale du bol 2 lorsqu'il est positionné dans l'espace de réception 41.

Tel que cela sera aussi développé ci-après, la base motorisée 4 comprend aussi un ou plusieurs organes moteurs. Préférentiellement, la base motorisée 4 comprend un moteur principal configuré pour entraîner en rotation un outil de travail rotatif agencé dans le bol 2. L'outil de travail rotatif peut, par exemple, être un batteur, un fouet, une hélice, ou tout autre outil de travail rotatif adapté à la préparation culinaire.

### Bol

Comme indiqué précédemment, le système de verrouillage 10 est adapté pour verrouiller une liaison entre le bol 2 et la base motorisée 4. Plus précisément, le premier organe de verrouillage 6 du système de verrouillage 10 est fixé au bol 2. Le bol 2 présente une paroi de fond 22 et une paroi latérale 23 présentant un bord supérieur délimitant une ouverture supérieure. Le bol 2 peut présenter une forme cylindrique ou cylindro-conique. Typiquement, le bol 2 peut notamment être réalisé en métal tel que de l'acier inoxydable.

Selon un mode de réalisation, le bol 2 peut comporter un dispositif de chauffage électrique. Le dispositif de chauffage électrique peut notamment être agencé dans la partie inférieure du bol 2. Si désiré le dispositif de chauffage électrique peut être alimenté à partir de la base motorisée 4 au moyen de connecteurs électriques, ou broches d'alimentation électrique.

Selon un autre mode de réalisation, le bol 2 peut être configuré pour être chauffé par un dispositif de chauffage agencé dans la base motorisée 4. Si désiré le dispositif de chauffage peut être un dispositif de chauffage par induction.

La paroi de fond 22 peut comprendre des moyens de réception d'un outil de travail rotatif. Typiquement, ces moyens de réception peuvent être une protubérance adaptée pour être enclenchée dans un élément femelle de l'outil de travail rotatif, ou une empreinte adaptée pour accueillir une protubérance de l'outil de travail rotatif. Selon un mode de réalisation ces moyens de réception peuvent comprendre un entraineur supporté par un dispositif d'entraînement comportant un arbre d'entraînement fixé sur le fond du bol 2 par des moyens de guidage assurant à la fois la libre rotation de l'arbre d'entraînement perpendiculairement à la paroi de fond 22 du bol 2 et l'étanchéité de la liaison rotative, l'arbre d'entraînement traversant la paroi de fond 22 du bol 2 et comportant une extrémité supérieure munie de méplats sur laquelle est engagé l'entraineur ainsi qu'une extrémité inférieure venant s'accoupler à un élément solidaire en rotation du moteur principal lorsque le bol 2 est correctement placé sur la base motorisée 4.

La paroi latérale 23 du bol 2 peut présenter une poignée permettant à l'utilisateur de saisir le bol 2. Le plus souvent, la poignée est réalisée en matériaux plastiques permettant une isolation thermique de la poignée, pour qu'un utilisateur puisse saisir le bol 2 sans se brûler. D'une manière avantageuse, une portion supérieure de la paroi latérale 23 peut présenter un retour formant un bec verseur.

En outre, selon l'exemple ici présenté, le bol 2 présente une surface inférieure 21 s'étendant dans l'espace de réception 41 de la base motorisée 4 lorsque le bol 2 est en place sur la base motorisée 4. La partie inférieure du bol 2 présente des moyens de positionnement sur la base motorisée 4 configurés pour bloquer le bol 2 en rotation autour d'une direction axiale A correspondant à la direction de mise en place du bol 2 sur la base motorisée 4, ainsi que pour bloquer le bol 2 en translation latérale par rapport à la base motorisée 4. Ces moyens de positionnement peuvent comporter une nervure circulaire adaptée pour s'engager dans une empreinte de la base motorisée 4 et une empreinte circulaire adaptée pour recevoir une protubérance de la base motorisée 4. La partie inférieure du bol 2 peut délimiter avec la paroi de fond 22 un compartiment logeant un élément chauffant.

### Système de verrouillage

Le système de verrouillage 10 comprend essentiellement un premier organe de verrouillage 6 agencé sur le bol 2 et un deuxième organe de verrouillage 8 monté mobile en rotation sur la base motorisée 4. Tel que cela sera développé ci-après, le système de verrouillage 10, permet de verrouiller en translation le bol 2 par rapport à la base motorisée 4, lorsque le bol 2 est en place sur la base motorisée 4, pour empêcher le retrait du bol 2 de la base motorisée 4.

D'une manière avantageuse, le premier organe de verrouillage 6 et le deuxième organe de verrouillage 8 sont allongés et prévus pour s'insérer l'un dans l'autre.

### Premier organe de verrouillage

Le premier organe de verrouillage 6 s'étend à partir de la surface inférieure 21 du fond du bol 2 selon une direction axiale A correspondant à la direction de mise en place du bol 2 sur la base motorisée 4.

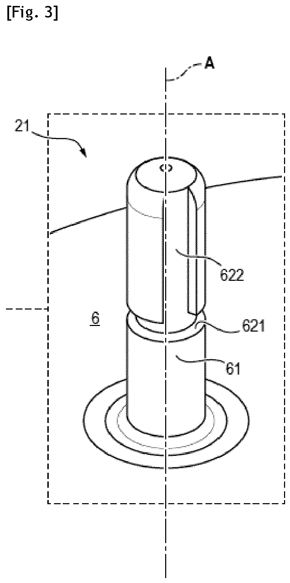

Préférentiellement, selon l'exemple ici présenté, le premier organe de verrouillage 6 est une broche 61, tel que visible sur les figures 2 et 3. Par broche 61, il est entendu une tige pouvant être creuse ou pleine. Préférentiellement, la broche 61 est une tige pleine, c'est-à-dire monobloc. Selon l'exemple ici présenté, la broche 61 est une broche 61 métallique ce qui garantit la solidité du système de verrouillage 10. Cependant, selon d'autres exemples, la broche 61 pourrait être réalisée en matériaux plastiques ou composites présentant des caractéristiques mécaniques satisfaisantes pour garantir la solidité du système de verrouillage 10. La broche 61 présente deux extrémités, une extrémité fixée à la surface inférieure 21 du bol 2, et une extrémité libre.

Comme on peut l'observer sur les figures, la broche 61 présente plusieurs rainures 62. Plus précisément, selon le mode de réalisation ici présenté, la broche 61 présente deux rainures axiales 622. Les rainures axiales 622, sont radicalement opposées sur la périphérie la broche 61. Par axiales, il est entendu que les rainures axiales 622 s'étendent selon un axe parallèle à la direction axiale A. Ces deux rainures axiales 622 débouchent chacune d'une part à l'extrémité libre de la broche 61. D'autre part, ces deux rainures axiales 622 débouchent chacune dans une rainure radiale 621. Selon l'exemple ici présenté, la broche 61 ne comprend qu'une seule rainure radiale 621. Cette rainure radiale est circulaire et parcourt l'ensemble de la périphérie de la broche 61. Ainsi, en résumé, selon l'exemple ici présenté, la broche 61 comprend deux rainures axiales 622 et une rainure radiale 621.

### Deuxième organe de verrouillage

Selon une description générale, le deuxième organe de verrouillage 8 est monté mobile en rotation sur l'espace de réception 41 du bol 2 autour de la direction axiale A et est configuré pour pivoter entre une position de verrouillage, dans laquelle le premier organe de verrouillage 6 et le deuxième organe de verrouillage 8 sont insérés l'un dans l'autre et sont bloqués en translation l'un par rapport à l'autre selon la direction axiale A, et une position de déverrouillage, dans laquelle le premier organe de verrouillage 6 et le deuxième organe de verrouillage 8 sont libres en translation l'un par rapport à l'autre selon la direction axiale A pour permettre, la mise en place du bol 2 sur la base motorisée 4, ou le retrait du bol 2 de la base motorisée 4. Si désiré, le deuxième organe de verrouillage 8 peut être agencé au moins partiellement sous un capot de protection. Le capot de protection peut présenter une ouverture supérieure configurée pour permettre l'insertion du premier organe de verrouillage 6 et/ou pour laisser apparente une partie supérieure du deuxième organe de verrouillage 8.

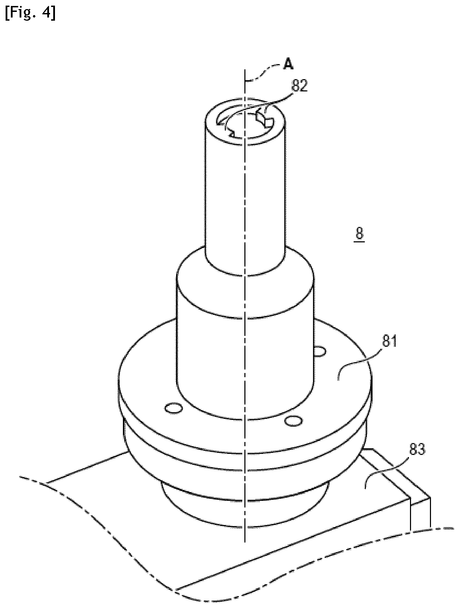

Préférentiellement, le deuxième organe de verrouillage 8 est un tube 81, tel que visible sur la figure 4. Le tube 81 peut présenter deux baïonnettes 82 radiales. Par baïonnette 82, il est entendu des tétons, des protubérances, adaptés pour coulisser dans les rainures axiales 622 et dans la rainure radiale 621 de la broche 61. Préférentiellement, les baïonnettes 82 sont radialement opposées.

Comme indiqué précédemment, le deuxième organe de verrouillage 8 est adapté pour pivoter entre une position de verrouillage et une position de déverrouillage. Selon l'exemple ici présenté, en position de déverrouillage, les baïonnettes 82 peuvent coulisser dans les rainures axiales 622 et peuvent déboucher dans la rainure radiale 621. Le deuxième organe de verrouillage 8 peut pivoter autour de la direction axiale A, de la position de déverrouillage vers la position de verrouillage. En position de verrouillage, les baïonnettes 82 sont présentes dans la rainure radiale 621 et sont bloquées dans cette dernière. En d'autres termes, en position de déverrouillage la broche 61 peut être déplacée en translation axiale par rapport au tube 81 et les baïonnettes 82 coulissent chacune dans une rainure axiale 622. En position de verrouillage, la broche 61 est engagée dans le tube 81 et les baïonnettes 82 sont positionnées dans la rainure radiale 621. La rotation du tube 81 décale les baïonnettes 82 par rapport aux rainures axiales 622. Ainsi, les baïonnettes 82 sont bloquées en translation dans la rainure radiale 621. Une autre rotation du tube 81 permet de retourner en position de déverrouillage, c'est-à-dire d'aligner les baïonnettes 82 avec les rainures axiales 622.

Ce système de verrouillage 10 est particulièrement avantageux, car il permet de bloquer en translation le bol 2 par rapport à la base motorisée 4, d'une manière sûre et simple. En effet, le verrouillage par broche 61 rainurée et baïonnette 82 garantit une fixation optimale. En d'autres termes, en position de verrouillage il est impossible d'extraire le bol 2 de la base motorisée 4, sauf à casser le système de verrouillage 10. En outre, ce système de verrouillage 10 s'affranchit du couvercle du bol 2, et de l'utilisateur. En effet ce système peut être automatisé dès que le bol 2 est positionné sur la base motorisée 4. En sus, l'utilisation d'une broche 61 est une disposition particulièrement intéressante car, de nombreux bols présentent déjà des broches pour assurer une connexion électrique avec la base motorisée 4. Ainsi, le système de verrouillage 10 selon l'invention peut être facilement ajouté sur un bol existant, par exemple en remplaçant l'une des broches de connexion électrique du bol 2 par une broche 61, ou en ajoutant une broche 61.

De même, le deuxième organe de verrouillage 8 peut-être rajouté sur une base motorisée 4 préexistante. À ce titre, le deuxième organe de verrouillage 8 peut présenter des moyens de fixation à la base motorisée 4. Il est précisé, que par moyens de fixation, on entend des moyens de fixation pouvant permettre de rapporter le deuxième organe de verrouillage 8 sur une base motorisée 4 préexistante. Bien entendu, ces moyens de fixation doivent garantir une fixation durable et résistante du deuxième organe de verrouillage 8 à la base motorisée 4. Par fixation durable et résistante, on entend une liaison de type encastrement résistant aux vibrations et aux sollicitations en translation de la broche 61 dans le tube 81.

Selon un mode de réalisation préférentiel, le deuxième organe de verrouillage 8 comprend un organe moteur 83 permettant de faire pivoter le tube 81 autour de la direction axiale A. De préférence cet organe moteur 83 est distinct du moteur principal prévu pour entraîner en rotation l'outil de travail rotatif. Si désiré l'organe moteur 83 peut être un moteur électrique ; un micromoteur ; un motoréducteur ; un servomoteur ; un vérin ; un électroaimant.

### Robot culinaire

Selon un autre aspect, l'invention concerne un ensemble de robot culinaire 1 comprenant la base motorisée 4 présentant le deuxième organe de verrouillage 8 et le bol 2 présentant le premier organe de verrouillage 6.

En outre, l'ensemble de robot culinaire 1 comprend une alimentation électrique et un dispositif de commande, usuellement agencés sur la base motorisée 4. Le dispositif de commande peut comprendre un écran et éventuellement au moins un bouton pour mettre en œuvre un ou plusieurs programmes de fonctionnement. Typiquement, le dispositif de commande peut comprendre un bouton d'allumage configuré pour mettre de mettre sous tension le robot culinaire 1. Si désiré, le dispositif de commande peut présenter une interface tactile.

Selon une forme de réalisation, le dispositif de commande peut comprendre un bouton (distinct ou non du bouton d'allumage) configuré pour permettre de lancer une commande de verrouillage du bol 2 sur la base motorisée 4. Typiquement, cette commande peut être couplée à une commande de démarrage de l'outil de travail rotatif. Dans ce cas, le dispositif de commande du robot culinaire 1 vérifie la présence du bol 2 sur la base motorisée 4, puis verrouille le bol 2 sur la base motorisée 4 et enfin enclenche la rotation de l'outil de travail rotatif.

Selon une autre forme de réalisation, le dispositif de commande peut verrouiller le bol 2 dès que le bol 2 est positionné sur la base motorisée 4. A cet effet le dispositif de commande peut notamment comporter un interrupteur actionné par la mise en place du bol 2 sur la base motorisée 4 et configuré pour activer le verrouillage du bol 2. En alternative, le dispositif de commande peut notamment comporter un capteur configuré pour activer le verrouillage du bol 2 lorsque le bol 2 a été mis en place sur la base motorisée 4.

Le plus souvent la rotation de l'outil de travail rotatif est arrêtée soit par une commande de l'utilisateur, soit par une minuterie ou par l'achèvement d'un programme de fonctionnement du dispositif de commande.

Si désiré, le dispositif de commande peut déverrouiller automatiquement le bol 2 de la base motorisée 4 à l'arrêt de l'outil de travail rotatif, ou après une temporisation.

En alternative ou en complètement, le dispositif de commande peut utiliser une commande de l'utilisateur pour permettre de déverrouiller le bol 2 afin de l'extraire de la base motorisée 4. Par commande, il est entendu une pression sur un bouton, une combinaison de bouton ou une interface tactile.

Le système de verrouillage 10 proposé permet ainsi de verrouiller le bol 2 sur la base motorisée 4, et de sécuriser l'utilisation du robot culinaire 1 en maintenant le bol 2 sur la base motorisée 4 et en évitant les retraits intempestifs du bol 2. Le système de verrouillage 10 permet également de simplifier la construction du bol 2 car le premier organe de verrouillage 6 peut être agencé sous la surface inférieure 21 du bol 2. Le bol 2 peut être dépourvu de parties mobiles appartenant au système de verrouillage 10. L'utilisateur ne peut accéder au système de verrouillage 10 lorsque le bol 2 est en place sur la base motorisée 4, du fait que la surface inférieure 21 du bol 2 est logée dans l'espace de réception 41 lorsque le bol 2 est en place sur la base motorisée 4.

## Revendications

1. Système de verrouillage (10) d'un bol (2) de robot culinaire (1) sur une base motorisée (4) de robot culinaire (1), la base motorisée (4) comprenant un espace de réception (41) destiné à recevoir le bol (2) de manière amovible, le système de verrouillage (10) comprenant un premier organe de verrouillage (6) agencé sur le bol (2) et un deuxième organe de verrouillage (8) agencé sur la base motorisée (4), le premier organe de verrouillage (6) et le deuxième organe de verrouillage (8) étant allongés et prévus pour s'insérer l'un dans l'autre, **caractérisé en ce que** le premier organe de verrouillage (6) s'étend à partir d'une surface inférieure (21) du bol (2) selon une direction axiale (A) correspondant à la direction de mise en place du bol (2) sur la base motorisée (4), **en ce que** le deuxième organe de verrouillage (8) est monté mobile en rotation sur l'espace de réception (41) du bol (2) autour de la direction axiale (A) et est configuré pour pivoter entre une position de verrouillage, dans laquelle le premier organe de verrouillage (6) et le deuxième organe de verrouillage (8) sont insérés l'un dans l'autre et sont bloqués en translation l'un par rapport à l'autre selon la direction axiale (A), et une position de déverrouillage, dans laquelle le premier organe de verrouillage (6) et le deuxième organe de verrouillage (8) sont libres en translation l'un par rapport à l'autre selon la direction axiale (A) pour permettre la mise en place du bol (2) sur la base motorisée (4) ou le retrait du bol (2) de la base motorisée (4).

2. Système de verrouillage (10) selon la revendication 1 dans lequel le premier organe de verrouillage (6), respectivement le deuxième organe de verrouillage (8), est une broche (61) formant un élément mâle et l'autre parmi le premier organe de verrouillage (6) et le deuxième organe de verrouillage (8) est un tube (81) formant un élément femelle ayant une forme complémentaire de l'élément mâle pour une insertion de l'élément mâle dans l'élément femelle.

3. Système de verrouillage (10) selon l'une quelconque des revendications 1 et 2 dans lequel l'un parmi le premier organe de verrouillage (6) et le deuxième organe de verrouillage (8) présente au moins une rainure (62) et l'autre parmi le premier organe de verrouillage (6) et le deuxième organe de verrouillage (8) présente au moins une baïonnette (82) adaptée pour coulisser dans ladite au moins une rainure (62).

4. Système de verrouillage selon l'une quelconque des revendications 1 et 2 dans lequel l'un parmi le premier organe de verrouillage (6) et le deuxième organe de verrouillage (8) présente au moins une rainure radiale (621) et au moins une rainure axiale (622) et l'autre parmi le premier organe de verrouillage (6) et le deuxième organe de verrouillage (8) présente au moins une baïonnette (82) adaptée pour coulisser dans ladite au moins une rainure axiale (622) et ladite au moins une rainure radiale (621), pour qu'en position de déverrouillage ladite au moins une baïonnette (82) puisse coulisser dans ladite au moins une rainure axiale (622), et en position de verrouillage ladite au moins une baïonnette (82) soit positionnée dans ladite au moins une rainure radiale (621) et ne puisse pas coulisser dans ladite au moins une rainure axiale (622).

5. Système de verrouillage (10) selon les revendications 2 et 4 en combinaison, dans lequel la broche (61) présente ladite au moins une rainure radiale (621) et ladite au moins une rainure axiale (622), et le tube (81) présente ladite au moins une baïonnette (82).

6. Système de verrouillage (10) selon la revendication 5 dans lequel la broche (61) comprend deux rainures axiales (622) radialement opposées et le tube (81) présente deux baïonnettes (82) radialement opposées.

7. Système de verrouillage (10) selon l'une quelconque des revendications 1 à 6, comprenant un organe moteur (83) adapté pour faire pivoter le deuxième organe de verrouillage (8) entre la position de verrouillage et la position de déverrouillage.

8. Système de verrouillage (10) selon la revendication 7, dans lequel l'organe moteur (83) est agencé dans la base motorisée (4).

9. Système de verrouillage (10) selon l'une quelconque des revendications 1 et 3 à 8 en combinaison avec la revendication 2, dans lequel le premier organe de verrouillage (6) est la broche (61) et le deuxième organe de verrouillage (8) est le tube (81).

10. Système de verrouillage (10) selon l'une quelconque des revendications 1 à 9 dans lequel le premier organe de verrouillage (6) comprend des moyens de fixation au bol (2) et le deuxième organe de verrouillage (8) comprend des moyens de fixation à la base motorisée (4), pour fixer le système de verrouillage (10) sur un robot culinaire (1) et un bol (2) préexistants.

11. Système de verrouillage (10) selon l'une quelconque des revendications 1 à 10 dans lequel la surface inférieure (21) est logée dans l'espace de réception (41) de la base motorisée (4) lorsque le bol (2) est en place sur la base motorisée (4).

12. Bol (2) de robot culinaire (1) destiné à être assemblé sur une base motorisée (4) de robot culinaire (1) et comprenant un premier organe de verrouillage (6) appartenant à un système de verrouillage (10) selon l'une quelconque des revendications 1 à 11.

13. Base motorisée (4) de robot culinaire (1) comprenant un espace de réception (41) d'un bol (2) de robot culinaire (1) dans lequel est agencé un deuxième organe de verrouillage (8) appartenant à un système de verrouillage (10) selon l'une quelconque des revendications 1 à 11.

14. Base motorisée (4) de robot culinaire (1) comprenant un moteur principal adapté pour entrainer en rotation un outil de travail rotatif, et comprenant un organe moteur (83) d'un système de verrouillage (10) selon la revendication 8.

15. Ensemble de robot culinaire (1) comprenant une base motorisée (4) selon l'une quelconque des revendications 13 ou 14 et un bol (2) selon la revendication 12.
